# FASCICULE DE BREVET EUROPEEN

(11) **EP 3 334 905 B1**
(45) Date de publication et mention de la délivrance du brevet: **25.12.2019**
(21) Numéro de dépôt: 16758234.5
(22) Date de dépôt: 05.08.2016
(51) Int. Cl.: F01D 5/14

(54) **AUBE DE ROTOR DE COMPRESSEUR DE TURBOMACHINE**
ROTORSCHAUFEL EINES TURBOMASCHINENVERDICHTERS
TURBOMACHINE COMPRESSOR ROTOR BLADE

(30) Priorité: 11.08.2015 FR 1557660
(43) Date de publication de la demande: 20.06.2018
(73) Titulaire: Safran Aircraft Engines, 75015 Paris (FR)
(72) Inventeur: MONTES PARRA, Roger Felipe, 77550 Moissy-cramayel Cedex (FR); COJANDE, Prasaad, 77550 Moissy-cramayel Cedex (FR)
(74) Mandataire: Cabinet Beau de Loménie
(86) Numéro de dépôt international: PCT/FR2016/052043
(87) Numéro de publication internationale: WO 2017/025684

(56) Documents cités:
- US-B1- 6 331 100

## Description

### Arrière-plan de l'invention

La présente invention concerne le domaine des aubes de turbomachine, et plus particulièrement celui des aubes de rotor de compresseur de turbomachine.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Dans la description qui suit, les termes "amont" et "aval" sont définis par rapport au sens de circulation normal du fluide à travers la turbomachine.

Une telle turbomachine peut comprendre plusieurs étages, chaque étage comportant normalement deux aubages, à savoir un aubage mobile et un aubage de redressement Chaque aubage comporte une pluralité d'aubes décalées les unes des autres en une direction latérale. Typiquement, ces aubes sont arrangées radialement autour d'un axe central A. Ainsi, un tel aubage forme un rotor, quand il s'agit d'un aubage mobile, ou un stator, quand il est un aubage de redressement. L'extrémité proximale de chaque aube par rapport à l'axe central A est normalement dénommée pied d'aube, tandis que l'extrémité distale est normalement dénommée tête d'aube. La distance entre le pied et la tête d'aube est connue comme hauteur d'aube. Entre le pied et la tête d'aube, l'aube est formée par un empilement de profils aérodynamiques sensiblement perpendiculaires à un axe radial Z. On entend par « sensiblement perpendiculaire », dans ce contexte, que le plan de chaque profil peut présenter un angle proche de 90°, par exemple entre 60° et 120°, par rapport à l'axe radial Z.

La géométrie des aubes fait l'objet d'efforts de conception très importants afin d'optimiser le comportement aérodynamique des aubes et donc d'augmenter le rendement des ensembles rotatifs, tels que les compresseurs, soufflantes ou turbines, dont elles font partie. C'est ainsi que les ingénieurs aérodynamiciens proposent des lois d'empilage des profils aérodynamiques optimisées du point de vue aérodynamique. Le document US 6 331 100 donne un exemple d'une telle loi d'empilage.

Toutefois, ces lois d'empilage ne sont pas nécessairement optimisées, ni même acceptables, du point de vue mécanique. Par exemple, des lois d'empilages particulièrement efficaces du point de vue aérodynamique ont été proposées dans lesquelles une part importante de l'aube se trouve en porte-à-faux par rapport au reste de l'aube. Cette masse importante en porte-à-faux est dès lors très sensible aux forces centrifuges issues de la rotation du rotor et entraîne une flexion importante de la partie haute de la pale, ce qui se traduit par une sollicitation mécanique importante en milieu de pale avec un niveau de contraintes statiques trop élevé au point de vol « Red Line », c'est-à-dire le point de vol d'urgence. Dès lors, de telles aubes ne disposent que d'une très faible marge dynamique et résistent mal en fatigue, en cas d'impact ou en cas de pompage de l'ensemble rotatif.

A l'inverse, d'autres lois d'empilage optimisées du point de mécanique ont été proposées par des ingénieurs mécaniciens mais n'ont pu être retenues en raison de leurs performances aérodynamiques trop faibles.

Il existe donc un réel besoin pour une aube bénéficiant à la fois de bonnes propriétés aérodynamiques et de bonnes propriétés mécaniques.

### Objet et résumé de l'invention

Le présent exposé concerne une aube de rotor de compresseur de turbomachine selon la revendication 1.

Une telle configuration permet de réduire fortement la masse de l'aube située en porte-à-faux, et donc de réduire la flexion de la partie haute de l'aube et du même coup le niveau de contraintes statique, tout en préservant de bonnes propriétés aérodynamiques.

De plus, les gains en tenue mécanique ainsi obtenus permettent d'alléger la structure de l'aube et notamment de réduire son épaisseur, améliorant ainsi ses propriétés aérodynamiques.

En outre, cette loi d'empilage laisse une liberté de conception quant à la géométrie de l'aube dans la direction axiale, ce qui permet d'optimiser librement l'aube dans cette direction pour optimiser ses propriétés aérodynamiques et/ou mécaniques en fonction des besoins d'espèce.

Dans certains modes de réalisation, ledit tronçon distal est directement adjacent à ladite tête d'aube.

Dans certains modes de réalisation, ledit tronçon distal est directement adjacent audit tronçon intermédiaire.

Dans certains modes de réalisation, la jonction entre ledit tronçon intermédiaire et ledit tronçon distal se situe à un niveau compris entre 75 et 80% de la hauteur de l'aube à partir du pied d'aube.

Dans certains modes de réalisation, ledit tronçon distal s'étend sur au plus 25 % de la hauteur d'aube. On réduit encore ainsi la masse en porte-à-faux.

Dans certains modes de réalisation, ledit tronçon distal s'étend sur au moins 5 % de la hauteur d'aube.

Dans certains modes de réalisation, ledit tronçon distal s'étend sur au moins 15 % de la hauteur d'aube.

Dans certains modes de réalisation, la projection dans un plan radial de la ligne traversant les centres de gravités de chaque tranche tangentielle de l'aube est en forme de gamma. La courbe représentant la coordonnée tangentielle, appelée yG, du centre de gravité de chaque tranche de l'aube en fonction de la cote le long de l'aube présente ainsi un segment montant sensiblement rectiligne, apportant une raideur accrue à la partie inférieure de l'aube, et un segment subhorizontal, ne laissant qu'une faible masse en porte-à-faux. De plus, la courbure prononcée à l'interface entre le segment intermédiaire et le segment distal de l'aube permet de casser le trajet d'effort entre la partie haute et la partie basse de l'aube, aboutissant dès lors à réduire l'importance des contraintes générées, dans la partie basse de la pale, par la flexion de la partie haute de l'aube.

Conformément à l'invention, la projection dans un plan radial de la ligne traversant les centres de gravités de chaque tranche tangentielle de l'aube possède au niveau du tronçon intermédiaire de l'aube un segment sensiblement rectiligne. Autrement dit la courbe de la coordonnée tangentielle yG en fonction de la cote possède une dérivée seconde sensiblement nulle au niveau de ce segment. Ceci traduit une raideur plus importante du tronçon intermédiaire de l'aube, renforçant ainsi sa tenue mécanique.

Conformément à l'invention, ledit segment sensiblement rectiligne s'étend sur au moins 40% de la hauteur d'aube, de préférence sur au moins 50% de la hauteur d'aube.

Dans certains modes de réalisation, ledit segment sensiblement rectiligne s'étend au moins jusqu'à un niveau situé à 50%, de préférence 55%, de préférence 60%, de préférence encore 65%, de la hauteur de l'aube à partir du pied d'aube.

Dans certains modes de réalisation, ledit segment sensiblement rectiligne s'étend au moins à partir d'un niveau situé au plus à 30%, de préférence 20%, de la hauteur de l'aube à partir du pied d'aube.

Dans certains modes de réalisation, la différence entre les coordonnées tangentielles du centre de gravité de la tranche de l'aube située en tête d'aube d'une part et du centre de gravité de la tranche de l'aube à l'interface entre le tronçon intermédiaire et le tronçon distal d'autre part est supérieure à 150%, de préférence 180%, de la différence entre les coordonnées tangentielles du centre de gravité de la tranche de l'aube située en pied d'aube d'une part et du centre de gravité de la tranche de l'aube à l'interface entre le tronçon intermédiaire et le tronçon distal d'autre part. Une telle aube présente une flèche importante en tête d'aube et bénéficie de bonnes propriétés mécaniques, notamment en termes de contraintes statiques, et aéronautiques.

Dans d'autres modes de réalisation, la différence entre les coordonnées tangentielles du centre de gravité de la tranche de l'aube située en tête d'aube d'une part et du centre de gravité de la tranche de l'aube à l'interface entre le tronçon intermédiaire et le tronçon distal d'autre part est comprise entre 100 et 150%, de préférence entre 110% et 140%, de la différence entre les coordonnées tangentielles du centre de gravité de la tranche de l'aube située en pied d'aube d'une part et du centre de gravité de la tranche de l'aube à l'interface entre le tronçon intermédiaire et le tronçon distal d'autre part. Une telle aube présente en tête d'aube une flèche moins prononcée que dans le cas précédent, ce qui facilite son intégration dans le module de turbomachine tout en préservant de bonnes propriétés mécaniques et aéronautiques. En particulier, ceci permet d'augmenter la distance entre l'aube du rotor et l'aube du stator située en amont, au niveau du sommet des aubes.

Dans certains modes de réalisation, l'épaisseur de l'aube est en tout point inférieure à 8% de la hauteur d'aube, de préférence 6%. Cette épaisseur réduite offre de bonnes propriétés aérodynamiques à l'aube.

Dans certains modes de réalisation, l'épaisseur du tronçon distal est inférieur à 5% de la hauteur d'aube, de préférence 3%.

Le présent exposé concerne en outre un disque d'aubes monobloc comportant une pluralité d'aubes selon l'un quelconque des modes de réalisations précédents. Un tel disque d'aubes monobloc présente les avantages de robustesse et simplicité. Toutefois, alternativement, des aubes suivant le présent exposé peuvent aussi être des aubes à fixation individuelle, par exemple avec un organe de fixation en pied de sapin sous le pied d'aube.

Le présent exposé concerne en outre un rotor comportant une pluralité d'aubes selon l'un quelconque des modes de réalisation précédents.

Le présent exposé concerne en outre une turbomachine comprenant un disque ou un rotor selon l'un des modes de réalisations précédents.

Les caractéristiques et avantages précités, ainsi que d'autres, apparaîtront à la lecture de la description détaillée qui suit, d'exemples de réalisation de l'aube proposée. Cette description détaillée fait référence aux dessins annexés.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe longitudinale schématique d'une turbomachine ;
- la figure 2A est une vue schématique en perspective d'un rotor de turbomachine ;
- la figure 2B est une vue schématique en perspective d'un détail du rotor de la figure 2A ;
- la figure 2C est une vue en coupe transversale d'une des aubes du rotor de la figure 2A dans le plan IIC-IIC représenté sur la figure 2B ;
- la figure 3A illustre une aube de rotor présentant une flèche avant
- la figure 3B illustre une aube de rotor présentant une flèche arrière ;
- la figure 3C illustre une aube de rotor présentant un angle d'inclinaison tangentielle négatif ;
- la figure 3D illustre une aube de rotor présentant un angle d'inclinaison tangentielle positif ;
- la figure 4 illustre un exemple d'aube selon l'invention ;
- la figure 5 est un diagramme illustrant l'évolution, entre le pied et la tête d'aube, de l'inclinaison tangentielle d'une première aube selon l'invention.
- la figure 6 est un diagramme illustrant l'évolution, entre le pied et la tête d'aube, de l'inclinaison tangentielle d'une deuxième aube selon l'invention.

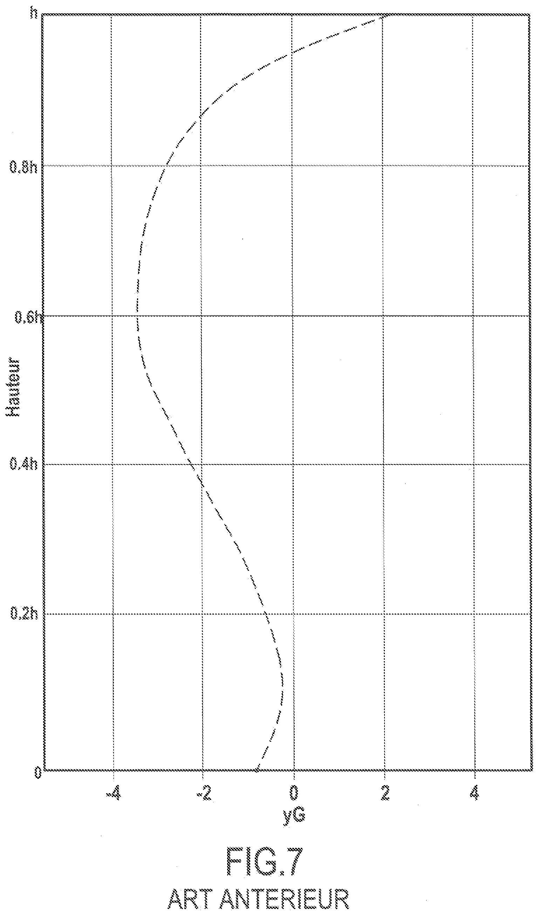

- la figure 7 est un diagramme illustrant l'évolution, entre le pied et la tête d'aube, de l'inclinaison tangentielle d'une aube antérieure de référence.
- les figures 8A et 8B illustrent les niveaux de contrainte statique du premier exemple d'aube.
- les figures 9A et 9B illustrent les niveaux de contrainte statique du deuxième exemple d'aube.
- les figures 10A et 10B illustrent les niveaux de contrainte statique d'une aube antérieure classique.

### Description détaillée de l'invention

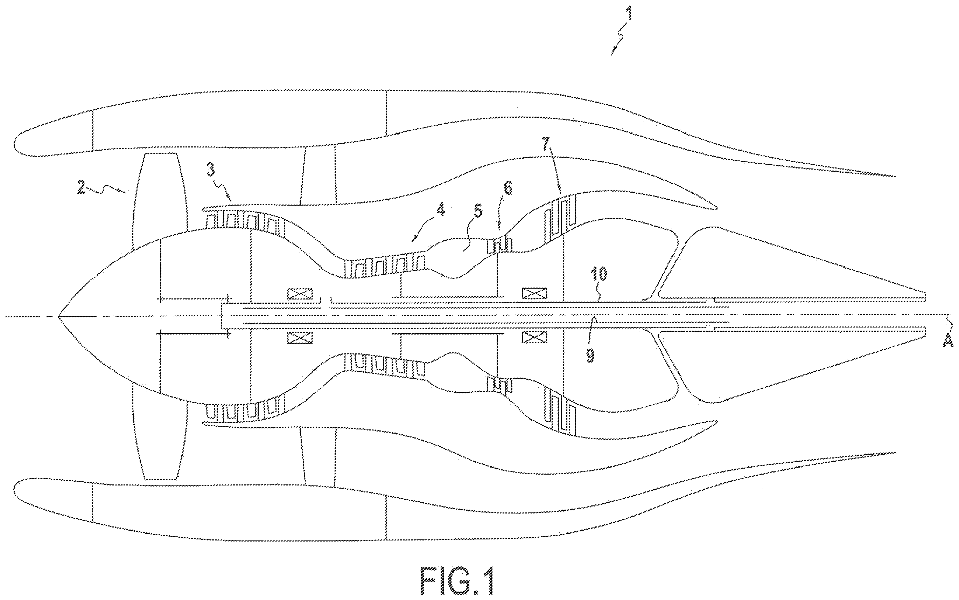

La figure 1 montre un exemple illustratif de turbomachine, plus spécifiquement un turboréacteur axial 1 à double flux. Le turboréacteur 1 illustré comporte une soufflante 2, un compresseur basse pression 3, un compresseur haute pression 4, une chambre de combustion 5, une turbine haute pression 6, et une turbine basse pression 7. La soufflante 2 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10. En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. A travers les arbres 9 et 10, les turbines 6, 7 actionnent ainsi la soufflante 2 et les compresseurs 3, 4. L'air propulsé par la soufflante 2 et les gaz de combustion sortant du turboréacteur 1 à travers une tuyère propulsive (non illustrée) en aval des turbines 6, 7 exercent une poussée de réaction sur le turboréacteur 1 et, à travers lui, sur un véhicule ou engin tel qu'un aéroplane (non illustré).

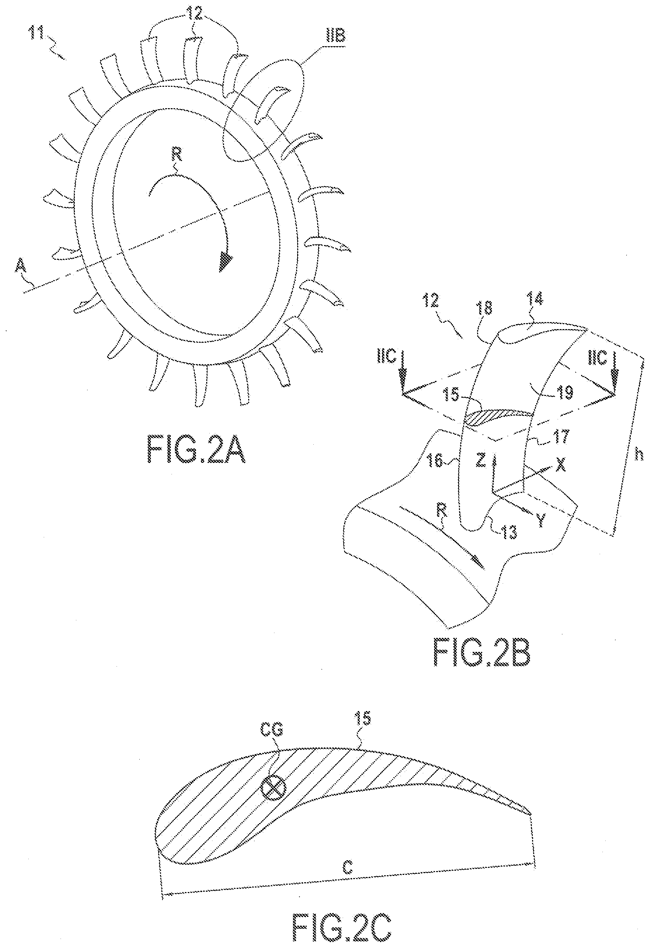

Chaque compresseur 3, 4 et chaque turbine 6, 7 du turboréacteur 1 comportent plusieurs étages, chaque étage étant formé par un aubage fixe ou stator, et un aubage tournant ou rotor. Un rotor 11 de compresseur axial est illustré schématiquement sur la figure 2A. Ce rotor 11 comporte une pluralité d'aubes 12 arrangées radialement autour de l'axe de rotation A du rotor 11, qui est sensiblement parallèle à la direction générale d'écoulement du fluide de travail à travers le turboréacteur 1. Les aubes 12 peuvent être intégrées en une seule pièce au rotor 11, formant ainsi un disque d'aubes monobloc, ou bien elles peuvent être formées séparément et jointes au rotor par des moyens de fixation généralement connus dans l'état de la technique, tels que des fixations en pied de sapin.

Comme illustré en plus grand détail sur la figure 2B, chaque aube 12 présente un système de référence spatial avec trois axes orthogonaux X, Y et Z. L'axe X est parallèle à l'axe de rotation A du rotor 11, l'axe Y est tangentiel à la direction de rotation R de l'aube 12 autour de l'axe de rotation A, et l'axe Z est un axe radial suivant une direction traversant l'axe de rotation A. Chaque aube 12 comporte un pied d'aube 13 et une tête d'aube 14 séparés par une hauteur d'aube h suivant la direction de l'axe radial Z. Entre le pied d'aube 13 et la tête d'aube 14, l'aube 12 comporte un empilement de profils aérodynamiques 15 dans des plans perpendiculaires à l'axe radial Z, formant un bord d'attaque 16 en direction amont, un bord de fuite 17 en direction aval, un extrados 18 et un intrados 19. Dans un rotor de compresseur ou de soufflante, le sens de rotation R en fonctionnement normal est tel que chaque aube 12 se déplace en direction de son intrados 19.

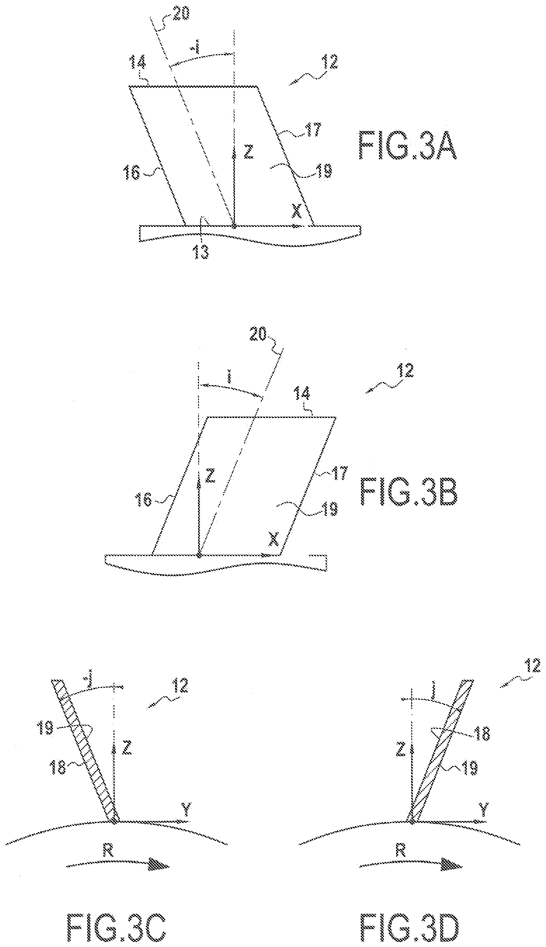

Un tel profil 15 de l'aube 12 est illustré sur la figure 2C. Chaque profil 15 présente une corde C entre le bord d'attaque 16 et le bord de fuite 17 et un centre de gravité CG défini comme le barycentre géométrique du profil 15. Dans le domaine des aubes de turbomachine, l'inclinaison de la ligne traversant les centres de gravité CG des profils 15 successifs par rapport à l'axe radial Z est utilisée pour définir la flèche et l'inclinaison tangentielle d'une aube 12. Ainsi, quand en direction de la tête d'aube 14 cette ligne 20 présente une inclinaison -i en direction amont dans le plan XZ, comme illustré sur la figure 3A, l'aube 12 présente une flèche avant. Par contre, quand cette ligne 20 présente une inclinaison I en direction aval sur le même plan, comme illustré sur la figure 3B, l'aube 12 présente une flèche arrière. De manière similaire, l'inclinaison tangentielle est définie par l'inclinaison de cette ligne 20 par rapport à l'axe radial Z dans le plan YZ. Ainsi, quand en direction de la tête d'aube 14 la ligne 20 est inclinée vers l'extrados 18 (et donc en sens opposé au sens de rotation R du rotor), l'aube 12 présente une inclinaison tangentielle -j négative comme illustré sur la figure 3C. Par contre, quand cette inclinaison est en direction de l'intrados 19 (et donc dans le sens de rotation R du rotor), l'aube 12 présente une inclinaison tangentielle j positive, comme illustré sur la figure 3D. A part la flèche et l'inclinaison tangentielle, les aubes de turbomachines présentent généralement des géométries complexes avec des profils 15 dont l'angle d'attaque, la cambrure, l'épaisseur et la corde C peuvent aussi varier le long de l'axe Z.

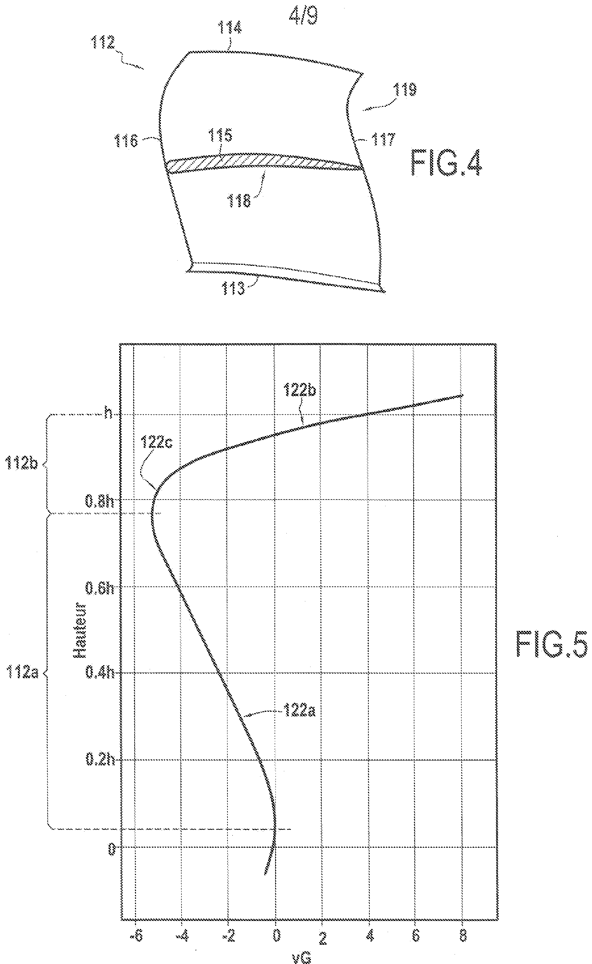

La figure 4 montre une aube 112 suivant un premier mode de réalisation de l'invention et permettant de pallier cet inconvénient des aubes en flèche avant. Cette aube 112 comporte aussi un pied d'aube 113, une tête d'aube 114, un bord d'attaque 117, un bord de fuite 116, un intrados 118 et un extrados 119 et est aussi formée par un empilement de profils aérodynamiques 115 sur la hauteur d'aube h entre le pied d'aube 113 et la tête d'aube 114.

La figure 5 illustre la loi yG de cette aube 112, c'est-à-dire l'évolution de la coordonnée tangentielle yG du centre de gravité CG le long de l'axe radial Z. Sur la figure 5, l'axe des abscisses yG est gradué en millimètres. L'inclinaison de cette courbe, c'est-à-dire la dérivée première du yG, correspond à l'inclinaison tangentielle de l'aube : ainsi, lorsque la courbe part vers la gauche, soit les yG négatifs, la portion correspondante de l'aube est en inclinaison tangentielle négative et lorsque la courbe part vers la droite, soit les yG positifs, la portion correspondant de l'aube est en inclinaison tangentielle positive. La courbure de cette courbe, c'est-à-dire la dérivée seconde du yG, correspond quant à elle à la courbure de l'aube dans la direction tangentielle.

Sur cette figure, on note alors que l'aube 112 présente un segment intermédiaire 112a en inclinaison tangentielle négative occupant environ 70% de la hauteur d'aube h jusqu'à une cote correspondant à environ 75% de la hauteur d'aube h. L'aube 112 présente également un segment distal 112b en inclinaison tangentielle positive s'étendant entre le segment intermédiaire 112a et la tête d'aube 114 et occupant ainsi environ 25% de la hauteur d'aube h.

On note également que le segment intermédiaire 112a comprend un segment sensiblement rectiligne 122a s'étendant à peu près entre les cotes correspondant à 15% et 70% de la hauteur d'aube h. Le segment distal 112b comprend également un segment sensiblement rectiligne 122b s'étendant à peu près à partir de la cote correspondant à 90% de la hauteur d'aube h jusqu'à la tête d'aube 114. La courbe du yG prend ainsi une forme en gamma. La courbure de l'aube est alors concentrée dans une zone 122c restreinte de l'aube, principalement entre les cotes correspondant à 70% et 90% de la hauteur d'aube h : la courbe du yG tourne ainsi de plus de 90° en moins de 20% de la hauteur d'aube h, ce qui contribue à découpler les efforts s'exerçant sur le segment intermédiaire 112a et le segment distal 112b de l'aube 112.

On note également que le segment distal 112b s'étend fortement du côté des yG positifs jusqu'à atteindre environ 4 mm en tête d'aube, soit pratiquement autant, en valeur absolue, que la coordonnée atteinte du côté des yG négatifs à l'interface entre le segment intermédiaire 112a et le segment distal 112b.

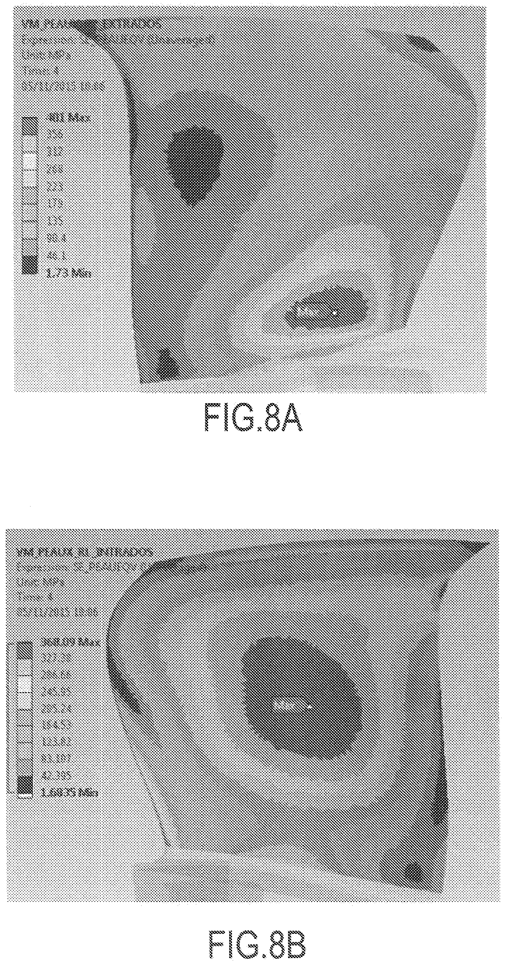

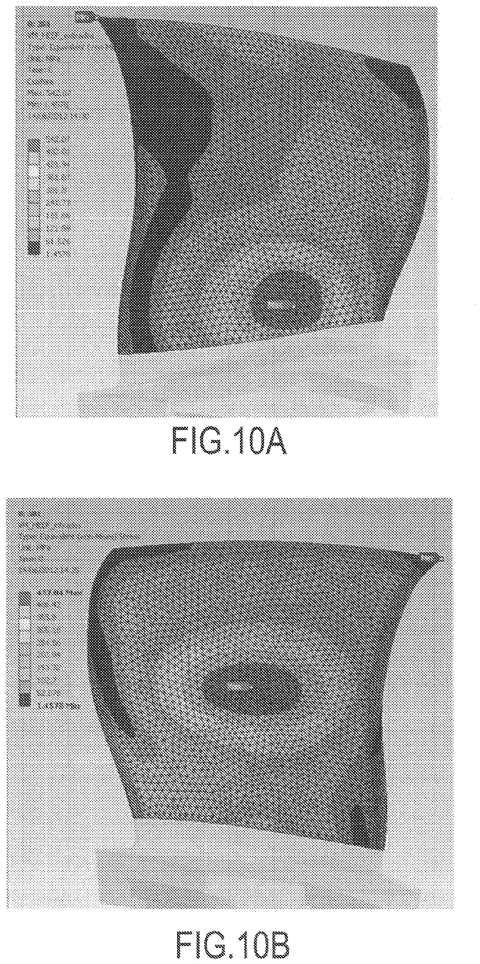

Les figures 8A et 8B sont des captures d'écran d'un logiciel de calcul de contraintes mécaniques: elles illustrent les niveaux de contrainte statique à l'extrados, respectivement l'intrados, de l'aube selon le premier exemple. Pour comparaison, les figures 10A et 10B illustrent pour leur part les niveaux de contrainte statique à l'extrados, respectivement l'intrados, d'une aube antérieure de référence dont la loi d'empilage yG, représentée sur la FIG 8, est en forme de S.

On note ainsi que le niveau de contrainte maximum à l'extrados de l'aube du premier exemple est de 401 MPa lorsque ce niveau maximum est de 542 MPa pour l'aube de référence, soit une diminution de 26%. Du côté intrados, le niveau de contrainte maximum est de 368 MPa pour l'aube du premier exemple contre 457 MPa pour l'aube de référence, soit une diminution de 19%.

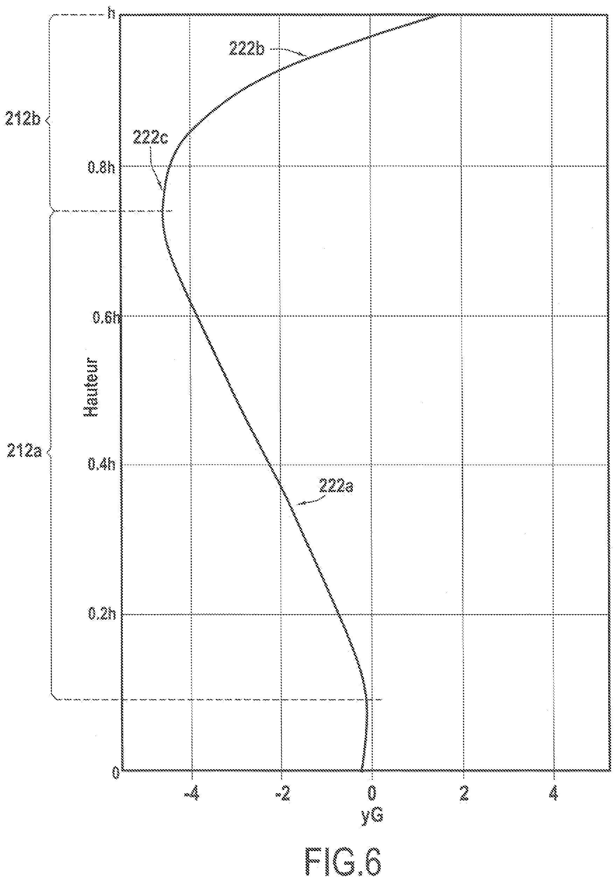

La figure 6 illustre la loi yG d'un deuxième exemple d'aube. Sur cette figure, on note que cette deuxième aube présente sensiblement la même forme en gamma si ce n'est que son segment distal 212b s'étend moins loin que celui du premier exemple, atteignant environ 1,5 mm en tête d'aube, soit environ 30%, en valeur absolue, de la coordonnée atteinte du côté des yG négatifs à l'interface entre le segment intermédiaire 212a et le segment distal 212b.

Malgré cela, on retrouve la présence d'un segment intermédiaire 212a en inclinaison tangentielle négative, occupant environ 70% de la hauteur d'aube h jusqu'à une cote correspondant à environ 75% de la hauteur d'aube h, et un segment distal 212b en inclinaison tangentielle positive s'étendant entre le segment intermédiaire 212a et la tête d'aube et occupant ainsi environ 25% de la hauteur d'aube h.

Le segment intermédiaire 212a comprend également un segment sensiblement rectiligne 222a s'étendant à peu près entre les cotes correspondant à 15% et 70% de la hauteur d'aube h. Le segment distal 212b comprend également un segment sensiblement rectiligne 222b s'étendant à peu près à partir de la cote correspondant à 90% de la hauteur d'aube h jusqu'à la tête d'aube 114. La courbure de l'aube est alors concentrée dans une zone 222c restreinte de l'aube, principalement entre les cotes correspondant à 70% et 90% de la hauteur d'aube h : la courbe du yG tourne ainsi de plus de 90° en moins de 20% de la hauteur d'aube h, ce qui contribue à découpler les efforts s'exerçant sur le segment intermédiaire 212a et le segment distal 212b de l'aube.

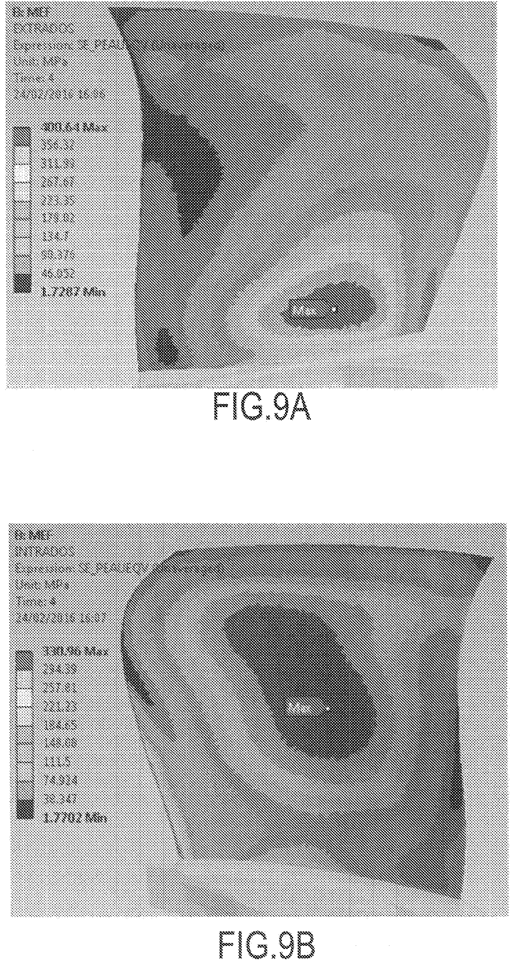

Les figures 9A et 9B sont à nouveau des captures d'écran d'un logiciel de calcul de contraintes mécaniques : elles illustrent les niveaux de contrainte statique à l'extrados, respectivement l'intrados, de l'aube selon le deuxième exemple.

On note ainsi que le niveau de contrainte maximum à l'extrados de l'aube du deuxième exemple est de 401 MPa lorsque ce niveau maximum est de 542 MPa pour l'aube de référence, soit une diminution de 26%, Du côté intrados, le niveau de contrainte maximum est de 331 MPa pour l'aube du premier exemple contre 457 MPa pour l'aube de référence, soit une diminution de 28%.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Aube de rotor de compresseur de turbomachine comportant un extrados (18), un intrados (19), un pied d'aube (113) et une tête d'aube (114) séparées par une hauteur d'aube (h) suivant la direction d'un axe radial (Z), au moins un tronçon intermédiaire (112a) présentant une inclinaison tangentielle négative, vers l'extrados (18), et un tronçon distal (112b), situé entre le tronçon intermédiaire (112a) et la tête d'aube (114), présentant une inclinaison tangentielle positive, vers l'intrados (19),
dans laquelle le tronçon distal (112b) s'étend sur au plus 30% de ladite hauteur d'aube (h), et
**caractérisé en ce que** la projection dans un plan radial de la ligne traversant les centres de gravités de chaque tranche tangentielle (115) de l'aube (110) possède au niveau du tronçon intermédiaire (112a) de l'aube un segment sensiblement rectiligne (122a) s'étendant sur au moins 40% de la hauteur d'aube (h).

2. Aube selon l'une quelconque des revendications précédentes, dans laquelle ledit tronçon distal (112b) est directement adjacent à ladite tête d'aube (114), et
dans laquelle ledit tronçon distal (112b) est directement adjacent audit tronçon intermédiaire (112a).

3. Aube selon l'une quelconque des revendications précédentes, dans laquelle ledit tronçon distal (112b) s'étend sur au plus 25 % de la hauteur d'aube (h).

4. Aube selon l'une quelconque des revendications précédentes, dans laquelle ledit tronçon distal (112b) s'étend sur au moins 5 % de la hauteur d'aube (h).

5. Aube selon l'une quelconque des revendications 1 à 4, dans laquelle ledit segment sensiblement rectiligne (112a) s'étend au moins jusqu'à un niveau situé à 50%, de préférence 60%, de la hauteur de l'aube (h) à partir du pied d'aube (113).

6. Aube selon l'une quelconque des revendications 1 à 5, dans laquelle ledit segment sensiblement rectiligne (122a) s'étend à partir d'un niveau situé au plus à 30%, de préférence 20%, de la hauteur de l'aube (h) à partir du pied d'aube (113).

7. Aube selon l'une quelconque des revendications 1 à 6, dans laquelle la projection dans un plan radial de la ligne traversant les centres de gravités de chaque tranche tangentielle (115) de l'aube (110) possède au niveau du tronçon distal (112b) de l'aube un second segment sensiblement rectiligne (122b), s'étendant de préférence à partir d'un niveau situé au plus à 90% de la hauteur de l'aube (h) à partir du pied d'aube (113).

8. Aube selon la revendication 7, dans laquelle la projection dans un plan radial de la ligne traversant les centres de gravités de chaque tranche tangentielle (115) de l'aube (110) tourne de plus de 90° en moins de 20% de la hauteur de l'aube (h).

9. Aube selon l'une quelconque des revendications précédentes, dans laquelle la différence entre les coordonnées tangentielles (yG) du centre de gravité de la tranche de l'aube située en tête d'aube d'une part et du centre de gravité de la tranche de l'aube à l'interface entre le tronçon intermédiaire (212a) et le tronçon distal (212b) d'autre part est comprise entre 100 et 150%, de préférence entre 110% et 140%, de la différence entre les coordonnées tangentielles (yG) du centre de gravité de la tranche de l'aube située en pied d'aube d'une part et du centre de gravité de la tranche de l'aube à l'interface entre le tronçon intermédiaire (212a) et le tronçon distal (212b) d'autre part.

10. Aube selon l'une quelconque des revendications précédentes, dans laquelle l'épaisseur de l'aube (112) est en tout point inférieure à 8% de la hauteur d'aube (h), de préférence 6%.

11. Disque d'aubes monobloc comportant une pluralité d'aubes (112) suivant l'une quelconque des revendications précédentes.

12. Rotor comportant une pluralité d'aubes (112) suivant l'une quelconque des revendications 1 à 10.

13. Turbomachine comprenant un disque selon la revendication 11 ou un rotor selon la revendication 12.

## Patentansprüche

1. Schaufel eines Rotors eines Turbomaschinenverdichters, umfassend eine Rückseite (18), eine Vorderseite (19), einen Schaufelfuß (113) und einen Schaufelkopf (114), die durch eine Schaufelhöhe (h) in der Richtung einer radialen Achse (Z) getrennt sind, wenigstens einen Zwischenabschnitt (112a) mit einer negativen tangentialen Neigung zur Rückseite (18) sowie einen zwischen dem Zwischenabschnitt (112a) und dem Schaufelkopf (114) gelegenen distalen Abschnitt (112b) mit einer positiven tangentialen Neigung zur Vorderseite (19),
wobei sich der distale Abschnitt (112b) über höchstens 30 % der Schaufelhöhe (h) erstreckt, und
**dadurch gekennzeichnet, dass** die Projektion in einer Radialebene der Linie, welche die Schwerpunkte jeder Tangentialscheibe (115) der Schaufel (110) durchquert, im Bereich des Zwischenabschnitts (112a) der Schaufel ein im Wesentlichen geradliniges Segment (122a) besitzt, das sich über wenigstens 40 % der Schaufelhöhe (h) erstreckt.

2. Schaufel nach dem vorhergehenden Anspruch, bei der der distale Abschnitt (112b) direkt an den Schaufelkopf (114) angrenzt, und
bei der der distale Abschnitt (112b) direkt an den Zwischenabschnitt (112a) angrenzt.

3. Schaufel nach einem der vorhergehenden Ansprüche, bei der sich der distale Abschnitt (112b) über höchstens 25 % der Schaufelhöhe (h) erstreckt.

4. Schaufel nach einem der vorhergehenden Ansprüche, bei der sich der distale Abschnitt (112b) über wenigstens 5 % der Schaufelhöhe (h) erstreckt.

5. Schaufel nach einem der Ansprüche 1 bis 4, bei der sich das im Wesentlichen geradlinige Segment (112a) wenigstens bis zu einer Höhe erstreckt, die auf 50 %, vorzugsweise 60 % der Höhe der Schaufel (h) vom Schaufelfuß (113) aus liegt.

6. Schaufel nach einem der Ansprüche 1 bis 5, bei der sich das im Wesentlichen geradlinige Segment (112a) ausgehend von einer Höhe erstreckt, die höchstens auf 30 %, vorzugsweise 20 % der Höhe der Schaufel (h) vom Schaufelfuß (113) aus liegt.

7. Schaufel nach einem der Ansprüche 1 bis 6, bei der die Projektion in einer Radialebene der Linie, welche die Schwerpunkte jeder Tangentialscheibe (115) der Schaufel (110) durchquert, im Bereich des distalen Abschnitts (112b) der Schaufel ein zweites im Wesentlichen geradliniges Segment (122b) aufweist, das sich vorzugsweise ausgehend von einer Höhe erstreckt, die höchstens bei 90 % der Höhe der Schaufel (h) vom Schaufelfuß (113) aus liegt.

8. Schaufel nach Anspruch 7, bei der die Projektion in einer Radialebene der Linie, welche die Schwerpunkte jeder Tangentialscheibe (115) der Schaufel (110) durchquert, sich in weniger als 20 % der Höhe der Schaufel (h) um mehr als 90° dreht.

9. Schaufel nach einem der vorhergehenden Ansprüche, bei der die Differenz zwischen den Tangentialkoordinaten (yG) des Schwerpunkts der Scheibe der Schaufel, welche am Schaufelkopf gelegen ist, einerseits und des Schwerpunkts der Scheibe der Schaufel an der Schnittstelle zwischen dem Zwischenabschnitt (212a) und dem distalen Abschnitt (212b) andererseits zwischen 100 und 150 %, vorzugsweise zwischen 110 % und 140 % der Differenz zwischen den Tangentialkoordinaten (yG) des Schwerpunkts der Scheibe der Schaufel, die am Schaufelfuß gelegen ist, einerseits und des Schwerpunkts der Scheibe der Schaufel an der Schnittstelle zwischen dem Zwischenabschnitt (212a) und dem distalen Abschnitt (212b) andererseits beträgt.

10. Schaufel nach einem der vorhergehenden Ansprüche, bei der die Dicke der Schaufel (112) in jeder Stelle weniger als 8 % der Schaufelhöhe (h), vorzugsweise 6 %, beträgt.

11. Einstückige Schaufel-Scheibe, die eine Vielzahl von Schaufeln (112) nach einem der vorhergehenden Ansprüche umfasst.

12. Rotor, der eine Vielzahl von Schaufeln (112) nach einem der Ansprüche 1 bis 10 umfasst.

13. Turbomaschine, die eine Scheibe nach Anspruch 11 oder einen Rotor nach Anspruch 12 umfasst.

## Claims

1. A turbomachine compressor rotor blade comprising an upper surface (18), a lower surface (19), a blade root (113) and a blade tip (114) spaced apart by a blade height (h) along the direction of a radial axis (Z), at least one intermediate segment (112a) presenting a negative tangential slope, towards the upper surface (18), and a distal segment (112b) situated between the intermediate segment (112a) and the blade tip (114) and presenting a positive tangential slope, towards the lower surface (19);
wherein the distal segment (112b) extends over at most 30% of said blade height (h); and
**characterized in that** the projection onto a radial plane of the line passing through the centers of gravity of each tangential section (115) of the blade (110) possesses, in the intermediate segment (112a) of the blade, a segment (122a) that is substantially rectilinear and that extends over at least 40% of the blade height (h).

2. A blade according to any preceding claim, wherein said distal segment (112b) is directly adjacent to said blade tip (114), and
wherein said distal segment (112b) is directly adjacent to said intermediate segment (112a).

3. A blade according to either preceding claim, wherein said distal segment (112b) extends over at most 25% of the blade height (h).

4. A blade according to any preceding claim, wherein said distal segment (112b) extends over at least 5% of the blade height (h).

5. A blade according to any one of claims 1 to 4, wherein said substantially rectilinear segment (112a) extends at least to a level situated at 50%, preferably 60%, of the blade height (h) from the blade root (113).

6. A blade according to any one of claims 1 to 5, wherein said substantially rectilinear segment (122a) extends from a level situated at at most 30%, preferably at most 20%, of the blade height (h) from the blade root (113).

7. A blade according to any one of claims 1 to 6, wherein the projection onto a radial plane of the line passing through the centers of gravity of each tangential section (115) of the blade (110) possesses, in the distal segment (112b) of the blade, a second segment (122b) that is substantially rectilinear, and that extends preferably from a level situated at at most 90% of the blade height (h) from the blade root (113).

8. A blade according to claim 6 or claim 7, wherein the projection onto a radial plane of the line passing through the centers of gravity of each tangential section (115) of the blade (110) turns through more than 90° in less than 20% of the blade height (h).

9. A blade according to any preceding claim, wherein the difference between the tangential coordinates (yG) of the centers of gravity of the blade sections situated firstly at the blade tip and secondly at the interface between the intermediate segment (212a) and the distal segment (212b) lies in the range 100% to 150%, preferably in the range 110% to 140%, of the difference between the tangential coordinates (yG) of the centers of gravity of the blade sections situated firstly at the blade root and secondly at the interface between the intermediate segment (212a) and the distal segment (212b).

10. A blade according to any preceding claim, wherein the thickness of the blade (112) is at all points less than 8% of the blade height (h), and preferably less than 6%.

11. A single-piece blade disk comprising a plurality of blades (112) according to any preceding claim.

12. A rotor having a plurality of blades (112) according to any one of claims 1 to 11.

13. A turbomachine including a disk according to claim 12 or a rotor according to claim 13.
